# EUROPÄISCHE PATENTSCHRIFT

(11) **EP 4 430 821 B1**
(45) Veröffentlichungstag und Bekanntmachung des Hinweises auf die Patenterteilung: **23.09.2026**
(21) Anmeldenummer: 22814119.8
(22) Anmeldetag: 10.11.2022
(51) Int. Cl.: H04N 1/60

(54) **VERFAHREN ZUR KORREKTUR EINER FARBWIEDERGABEEIGENSCHAFT EINES VORGEGEBENEN DIGITALBILDES FÜR EINEN PROOFDRUCK UND/ODER EINEN PRODUKTIONSDRUCK**
METHOD FOR GENERATING CORRECTION DATA FOR A PROOF PRINTER AND PRODUCTION PRINTER, AND METHOD FOR PRODUCING A PROOF PRINT AND PRODUCTION PRINT
PROCÉDÉ DE GÉNÉRATION DE DONNÉES DE CORRECTION POUR UNE IMPRIMANTE D'ÉPREUVE ET UNE IMPRIMANTE DE PRODUCTION, AINSI QUE PROCÉDÉ DE GÉNÉRATION D'UNE IMPRESSION D'ÉPREUVE ET D'UNE IMPRESSION DE PRODUCTION

(30) Priorität: 12.11.2021 EP 21208085
(43) Veröffentlichungstag der Anmeldung: 18.09.2024
(73) Patentinhaber: Akzenta Paneele + Profile GmbH, 56759 Kaisersesch (DE)
(72) Erfinder: KLEMM, Markus, 33619 Bielefeld (DE); LINNENBRÜGGER, Timo, 56812 Cochem (DE); HANNIG, Dr. Hans-Jürgen, 51427 Bergisch Gladbach (DE)
(74) Vertreter: Michalski Hüttermann & Partner mbB
(86) Internationale Anmeldenummer: PCT/EP2022/081539
(87) Internationale Veröffentlichungsnummer: WO 2023/083992

(56) Entgegenhaltungen:
- EP-A1- 1 858 244
- DE-B3- 102015 106 770
- US-A1- 2002 051 159
- US-A1- 2006 126 106
- KASSON J M ET AL: "PERFORMING COLOR SPACE CONVERSIONS WITH THREE-DIMENSIONAL LINEAR INTERPOLATION", JOURNAL OF ELECTRONIC IMAGING, S P I E - INTERNATIONAL SOCIETY FOR OPTICAL ENGINEERING, US, vol. 4, no. 3, 1 July 1995 (1995-07-01), pages 226 - 249, XP000517861, ISSN: 1017-9909, DOI: 10.1117/12.208656

## Beschreibung

Die vorliegende Erfindung betrifft ein Verfahren zum Erstellen eines Proofdruckes, wobei der Proofdruck eines vorgegebenen Digitalbildes mittels eines Proofdruckers mit vorbestimmtem Proofdruck-Farbprofil erzeugt wird und der Proofdruck die Farbigkeit eines mit einem Produktionsdrucker erzeugbaren Zieldruckes desselben Digitalbildes simuliert.

Verfahren zum Erstellen von Korrekturdaten für einen Proofdrucker, zur Erstellung eines Proofdruckes, zur Erstellung von Korrekturdaten für einen Produktionsdrucker und zum Drucken eines vorgegebenen Digitalbildes für ein Produkt mit einem Produktionsdrucker sind an sich bekannt.

Bei der Produktion von Produkten, die ein in irgendeiner Weise gestaltetes Bild aufweisen, das mit einem Drucker in einem Produktionsprozess aufgebracht wird, ist es wünschenswert den Großteil an notwendigen Korrekturen, insbesondere farbliche Korrekturen, vornehmen zu können, bevor das Produkt im Rahmen der Produktion auf der Produktionsmaschine und insbesondere dem Produktionsdrucker gefertigt wird. Hierfür hat es sich etabliert sogenannte Proofdrucker zu verwenden, die üblicherweise deutlich kleiner sind als die bei der Produktion verwendeten Produktionsdrucker und insbesondere nicht in eine Produktionsstraße eingebaut sind. Die Proofdrucker sollen dabei möglichst die bei der Produktion erhaltene Farbigkeit des Produktes vorhersagen bzw. simulieren. Hierfür werden mit dem Proofdrucker Farbprofile verwendet, die an den Produktionsdrucker und das Produkt derart angepasst sind, dass ein Proofdruck möglichst genau das Produktionsdruckergebnis simuliert. Abweichungen von gewünschten Farbergebnis können so bereits beim Proofdruck zu erkennen sein und beim Test auf dem Produktionsdrucker bereits im Farbprofil als Korrektur berücksichtigt werden. Somit wird versucht die Notwendigkeit aufwändiger und kostenintensiver Anpassungen des Produktionsdruckes zu reduzieren.

Ein Problem derartiger Proofdrucker ist es jedoch, dass Korrekturen mit herkömmlichen Proofdrucken selbst für einfache Produkte häufig nicht ausreichend sind, um Korrekturen am Produktionsdrucker völlig zu vermeiden.

Ein weiteres Problem derartiger Proofdrucker ist zudem, dass die beim Proofdruck festgestellten Farbabweichungen für besonders komplizierte Produkte die verwendeten Farbprofile normalerweise die Farbabweichungen des Produktionsdruckers überhaupt nicht ausreichend genau vorhersagen, so dass für derartige Produkte oft besonders viele Testdrucke auf der Produktionsanlage erfolgen müssen. Dies ist besonders problematisch, da gerade bei derartigen Produkten die Produktion besonders kompliziert sein kann und Testdrucke auf der Produktionsanlage besonders aufwändig sein können. Besonders groß ist dieses Problem beispielsweise bei Produkten, bei denen das Bild auf einem anspruchsvollen Druckuntergrund gedruckt werden soll und/oder das Bild nach dem Druck noch weiter behandelt wird, wie beispielsweise durch Lackieren oder Kaschieren. Besonders problematisch ist dabei der farbgetreue Druck von Bildern, die mit einer strukturierten, durchsichtigen Oberfläche beschichtet werden, wie beispielsweise bei Dekorpaneelen.

Das Anwenden von Korrekturdaten eines Proofdruckers bietet somit noch Verbesserungspotential. Verbesserungspotential kann sich dabei insbesondere in der Genauigkeit und Effizienz ergeben, mit der ein Proofdrucker die Farbigkeit eines Produktes aus einem Produktionsdrucker simulieren kann, wobei insbesondere eine Anzahl notwendiger Testdrucke auf dem Produktionsdrucker reduziert werden kann.

US 2002/051159 A1 offenbart, dass sich eine Farbwiedergabeeigenschaft leicht und mit großer Genauigkeit korrigieren lässt. Eine Farbkarte, deren Punktprozentsatz sich von der einer Farbkarte unterscheidet, die bei der Erstellung eines Druckprofils verwendet wird, und deren Anzahl an Farbfeldern nicht groß ist, wird sowohl von der Druckmaschine als auch vom Proofgerät ausgegeben. Zur Korrektur des Druckprofils werden die so ermittelten Farbmesswerte der Farbtafeln miteinander verglichen.

US 2006/126106 A1 offenbart ein System und Verfahren zur Bereitstellung eines Remote-Proof-Druckers, wobei ein Remote-Proof-Druck erstellt, geprüft und verifiziert werden kann, bevor er einem Kunden zur Überprüfung bereitgestellt wird. Der Schritt der Remote-Proofdruckerüberprüfung umfasst das Scannen oder Digitalisieren des Proofdokuments und den Vergleich mit den Bilddaten, um festzustellen, ob das Proofdokument für die Überprüfung durch den Benutzer geeignet ist.

Es ist daher die Aufgabe der vorliegenden Erfindung, ein verbessertes Verfahren zur Korrektur von Farbwiedergabeeigenschaften für einen Proofdruck bereitzustellen.

Gelöst wird diese Aufgabe durch das Verfahren zur Korrektur von Farbwiedergabeeigenschaften eines Proofdruckes gemäß Anspruch 1. Bevorzugte Ausgestaltungen der Erfindung sind in den Unteransprüchen angegeben.

Mit der Erfindung wird ein Verfahren zum Erstellen eines Proofdruckes vorgeschlagen, wobei der Proofdruck eines vorgegebenen Digitalbildes mittels eines Proofdruckers mit vorbestimmtem Proofdruck-Farbprofil erzeugt wird und der Proofdruck die Farbigkeit eines mit einem Produktionsdrucker erzeugbaren Zieldruckes desselben Digitalbildes simuliert, mit folgenden Verfahrensschritten:
a) vorab Bereitstellen einer eine vorbestimmte Anzahl an Datenpaaren aus Start-Farbwert und Ziel-Farbwert umfassende Datenbank, wobei der Ziel-Farbwert der mittels eines Korrekturwertes korrigierte Start-Farbwert ist, wobei der Korrekturwert aus einer Farbabweichungen eines Test-Proofdrucks des Proofdruckers von einem Test-Produkt des Produktionsdrucker für den Start-Farbwert bestimmt ist;
b) Bereitstellen des Digitalbildes und Einteilen des Digitalbildes in eine Vielzahl von Bildpixeln;
c) Pro Bildpixel Bestimmen eines Eingangs-Farbwertes und Überprüfen, ob die Datenbank für den jeweiligen Eingangs-Farbwert einen Start-Farbwert aufweist;
d1) wenn die Datenbank für den jeweiligen Eingangs-Farbwert einen Start-Farbwert aufweist, dann Bereitstellen des dazugehörigen Ziel-Farbwertes;
d2) wenn die Datenbank für den jeweiligen Eingangs-Farbwert keinen Start-Farbwert aufweist, dann Bestimmen von wenigstens zwei dem jeweiligen Eingangs-Farbwert nächstgelegenen Start-Farbwerten, Interpolieren eines Ziel-Farbwertes anhand der nächstgelegenen Start-Farbwerte und Bereitstellen des interpolierten Ziel-Farbwertes;
e) Erstellen eines farbkorrigierten vorgegebenen Digitalbildes auf Basis der bereitgestellten Ziel-Farbwerte;
f) Erstellen von Druckdaten für den Proofdrucker aus dem farbkorrigierten vorgegebenen Digitalbild unter Anwendung des Proofdrucker-Farbprofils; und
g) Erzeugen eines Proofdruckes mit dem Proofdrucker auf Basis der erstellten Druckdaten.

Unter einem Drucker wird im Sinne der vorliegenden Erfindung insbesondere eine Vorrichtung verstanden, die farbige Druckpunkte auf einem Substrat ausgeben kann, und so ein entsprechendes Bild ausbilden kann.

Unter einem Proofdrucker wird im Sinne der vorliegenden Erfindung insbesondere ein Drucker verstanden, der im Vergleich zu einem Produktionsdrucker mit weniger Aufwand betrieben werden kann und dem Erstellen von Proofdrucken dient.

Unter einem Produktionsdrucker wird im Sinne der vorliegenden Erfindung insbesondere ein Drucker verstanden, der für die Herstellung eines Produktes verwendet wird und dabei beispielsweise in eine Produktionsstraße eingebunden ist. Unter einem Produktionsdrucker kann im Sinne der vorliegenden Erfindung allgemein auch ein Drucker verstanden werden, der nicht derselbe Drucker ist wie der Proofdrucker, insbesondere nicht der gleiche Drucker wie der Proofdrucker. Es versteht sich, dass entsprechend der Verfahren im Sinne der vorliegenden Erfindung im Allgemeinen für beliebige Druckerpaare angewendet werden können, wobei ein Drucker als Proofdrucker und ein Drucker als Produktionsdrucker fungiert.

Unter Farbwert wird ein Absolutwert verstanden, der die wahrnehmbare Zusammensetzung der Farbe beschreibt.

Unter Eingangs-Farbwert wird der Farbwert pro Bildpixel verstanden, der sich durch Erfassung des Digitalbildes aus dem selbigen in direkter Weise ergibt.

Unter Datenpaar aus Start-Farbwert und Ziel-Farbwert wird die Kombination aus zwei Farbwerten verstanden. Der Start-Farbwert ist ein beliebiger bereits vermessener Farbwert, für den Korrekturdaten vorliegen. Aus der Kombination aus Start-Farbwert und Korrekturdaten leitet sich der Ziel-Farbwert ab. Der Ziel-Farbwert gibt den Farbwert an, der gedruckt werden muss, um den dazugehörigen Start-Farbwert darzustellen. Die Darstellung bzw. der Druck des Start-Farbwertes weicht abhängig vom verwendeten Drucker ab. Der Ziel-Farbwert berücksichtigt diese Abweichung, sodass der gedruckte Ziel-Farbwert dem ursprünglichen Start-Farbwert simuliert.

Unter dem Simulieren der Farbigkeit eines Produktes wird im Sinne der vorliegenden Erfindung verstanden, dass die Farbtöne des gedruckten Bildes des Produktes nach Fertigstellung des Produktes möglichst genau erstellt werden können, ohne dass die gleichen Produktionsschritte angewendet werden müssen wie zur Erstellung des Produktes notwendig. Indem der Proofdrucker die Farbigkeit des Produktes simuliert, wird entsprechend ein Bild erstellt, dass möglichst die gleiche Farbigkeit aufweisen soll, wie das Bild in dem fertigen Produkt.

Unter einem Proofdrucker-Farbprofil oder Produktionsdrucker-Farbprofil wird im Sinne der vorliegenden Erfindung ein Profil verstanden, dass angepasst an den entsprechenden Drucker das bereitgestellte zu druckende Digitalbild so verarbeitet, dass das gedruckte Bild möglichst genau dem gewünschten Druckergebnis entspricht. Dabei kann das Produktionsdrucker-Farbprofil an den Produktionsdrucker und insbesondere auch an das Produkt angepasst sein. Das Proofdrucker-Farbprofil kann an den verwendeten Proofdrucker, den zu simulierenden Produktionsdrucker und das zu simulierende Produkt angepasst sein.

Durch das vorbeschriebene Verfahren kann vorteilhafterweise erreicht werden, dass auch Farbwerte korrigiert werden können, für die keine konkreten Korrekturwerte vorliegen. Dementsprechend wird es ermöglicht, mit einer beschränkten Anzahl an Korrekturwerten mehrere Millionen mögliche Farbwerte des Digitalbildes zu korrigieren. Auf diese Weise können die Farbwerte besonders gut und präzise an Proofdrucker, Produktionsdrucker, vorgegebenes Digitalbild und Produkt angepasst werden, wodurch insbesondere eine Genauigkeit der Simulation mit dem Proofdrucker verbessert werden kann und im Ergebnis vor einem Produktionsdruck bessere farbkorrigierten Digitalbilder für den Produktionsdrucker bereitgestellt werden können, so dass weniger Testdrucke am Produktionsdrucker notwendig sein können.

Gemäß einer bevorzugten Weiterbildung der Erfindung werden die Farbwerte in einem dreidimensionalen Farbraum, vorzugsweise im Lab-Farbraum, dargestellt. Der Lab-Farbraum beschreibt alle wahrnehmbaren Farben. Dazu werden die Farben in einem dreidimensionalen Farbraum abgebildet, wobei der Helligkeitswert L senkrecht auf der Farbebene a*b steht. Dabei gibt a das Verhältnis zwischen Grün und Rot und b das Verhältnis zwischen Blau und Gelb an. Zu den wichtigsten Eigenschaften des Lab-Farbmodells zählen die Geräteunabhängigkeit und die Wahrnehmungsbezogenheit. Das bedeutet, dass Farben unabhängig von der Art ihrer Erzeugung oder Wiedergabetechnik so definiert werden, wie sie von einem Normalbeobachter bei einer Standard-Lichtbedingung wahrgenommen werden.

Vorzugsweise ist vorgesehen, dass der nächstgelegene Start-Farbwert einen räumlichen Abstand kleiner oder gleich einem vorbestimmten Grenzwert zu dem Eingangs-Farbwert aufweist. Für einen Eingangs-Farbwert, für den kein passender Start-Farbwert in der Datenbank hinterlegt ist, werden demnach alle Start-Farbwerte, die sogenannten Stützpunkte, herangezogen, die im dreidimensionalen Farbraum einen räumlichen Abstand kleiner oder gleich dem vorbestimmten Grenzwert, bevorzugt kleiner oder gleich drei, aufweisen. Der Abstand zwischen zwei Farbpunkten im dreidimensionalen Lab-Farbraum zwischen zwei Farbpunkten wird beispielsweise mit dem Delta E zwischen den Farben berechnet.

Gemäß einer bevorzugten Weiterbildung der Erfindung werden bei der Interpolation des Ziel-Farbwertes die Start-Farbwerte entsprechend der räumlichen Abstände zu dem Eingangs-Farbwert gewichtet. Die Gewichtung erfolgt nach dem Prinzip der adaptiven inversen Abstandsgewichtung. Dabei gilt, dass die Ähnlichkeit eines unbekannten Wertes zum bekannten Messwert mit der Entfernung von diesem abnimmt, die Daten also umso unähnlicher sind, je weiter sie auseinander liegen. Dieser Zusammenhang wird bei der inversen Abstandsgewichtung dadurch zum Ausdruck gebracht, dass der Messwert mit einem Gewicht multipliziert wird, das proportional zum Inversen des Abstands zwischen Schätzpunkt und Messort ist. Je näher also die gefundene Farbe in der Datenbank an der zu suchenden Farbe ist, desto größer ist Ihr Einfluss an der finalen Bestimmung des Ziel-Farbwertes.

Das Verfahren umfasst die Schritte:
f) Erstellen von Druckdaten für den Proofdrucker aus dem farbkorrigierten vorgegebenen Digitalbild unter Anwendung des Proofdrucker-Farbprofils; und
g) Erzeugen eines Proofdruckes mit dem Proofdrucker auf Basis der erstellten Druckdaten.

Unter dem Erstellen von Druckdaten wird im Sinne der vorliegenden Erfindung das Umwandeln eines Digitalbildes in von dem Drucker zu verarbeitende Daten verstanden. Dazu werden die ermittelten Ziel-Farbwerte des farbkorrigierten Digitalbildes, bevorzugt im Lab-Farbraum, in ein druckerspezifisches CMYK-Profil übertragen. Das CMYK-Farbmodell ist ein geräteabhängiges Farbmodell. Es beschreibt, zu welchen Anteilen ein Ausgabegerät die Farbbestandteile kombinieren soll, um einen bestimmten Farbton herzustellen.

Unter einem Digitalbild wird im Sinne der vorliegenden Erfindung insbesondere ein digital speicherbares Bild verstanden, dessen Bildinformationen über Bildpunkte bestimmt sind, die jeweils einen Farbwert bezüglich eines Farbsystems aufweisen. Ein vorgegebenes Digitalbild ist im Sinne der vorliegenden Erfindung ein Digitalbild das zum Drucken für ein Produkt vorgesehen ist.

Auf diese Weise kann erreicht werden, dass der Proofdruck besonders gut die zu erwartenden Farbwerte des Produktes simuliert. Im Ergebnis können somit vor einem Produktionsdruck bessere Farbkorrekturen für den Produktionsdrucker bereitgestellt werden, so dass weniger Testdrucke am Produktionsdrucker notwendig sein können.

Bevorzugt kann vorgesehen sein, dass das vorgegebene Digitalbild durch Scannen und/oder Fotografieren eines Gegenstands erstellt wurde.

Dadurch kann vorteilhafterweise erreicht werden, dass die Farbabweichung auch anhand des Gegenstandes ermittelt werden kann.

Gemäß einer bevorzugten Weiterbildung der Erfindung werden die Korrekturdaten für einen Proofdrucker mit vorbestimmten Proofdrucker-Farbprofil und einen Produktionsdrucker mit vorbestimmten Produktionsdrucker-Farbprofil mittels folgender Verfahrensschritte ermittelt:
I) Bereitstellen eines digitalen Testbildes aufweisend mehrere Eingangs-Farbwerte;
IIa) Erstellen von Druckdaten für den Produktionsdrucker aus dem digitalen Testbild unter Anwendung des Produktionsdrucker-Farbprofils;
IIb) Erzeugen eines Test-Produkts mit dem Produktionsdrucker auf Basis der erstellten Druckdaten für den Produktionsdrucker;
IIIa) Erstellen von Druckdaten für den Proofdrucker aus dem digitalen Testbild unter Anwendung des Proofdrucker-Farbprofils;
IIIb) Erzeugen eines Test-Proofdruckes mit dem Proofdrucker auf Basis der erstellten Druckdaten für den Proofdrucker;
IV) Bestimmen von Farbabweichungen des Test-Proofdruckes pro Eingangs-Farbwert des Test-Produktes;
V) Ermitteln von Korrekturdaten für den Proofdrucker auf Basis der bestimmten Farbabweichungen pro Eingangs-Farbwert.

Unter einem digitalen Testbild wird im Sinne der vorliegenden Erfindung ein Digitalbild verstanden, welches dafür vorgesehen ist einen Druck zu testen.

Unter dem Bestimmen von Farbabweichungen wird im Sinne der vorliegenden Erfindung insbesondere verstanden, dass die Farbwerte von übereinstimmenden Punkten zweier Bilder miteinander verglichen werden, insbesondere durch Bestimmen eines Farbabstandes der Farbwerte, besonders als Delta E.

Unter dem Erstellen von Korrekturdaten wird im Sinne der vorliegenden Erfindung insbesondere das Erstellen von Daten verstanden, die für einzelne Farbwerte im Farbraum Korrekturwerte umfassen, basierend auf einer Farbabweichung zu dem erwarteten Farbwert.

Bevorzugt kann vorgesehen sein, dass nicht alle ermittelten Korrekturwerte in der Datenbank hinterlegt werden und dass das digitale Testbild auf Basis des vorgegebenen Digitalbild bereitgestellt wird, wobei bevorzugt das digitale Testbild Farbfelder aufweist, die jeweils einen Farbwert aufweisen, der im vorgegebenen Digitalbild besonders häufig vorkommt.

Vorzugsweise ist vorgesehen, dass das Testbild weichgezeichnet wird und dann alle vorkommenden Farbwerte in einer Liste nach ihrer Häufigkeit sortiert werden. Der am häufigsten vorkommende Farbwert wird als erster ausgewählt. Alle Farbwerte in der Liste, deren Abstand kleiner als ein Grenzwert, bevorzugt kleiner als Delta E von 0,5 zu diesem Farbwert ist, werden aus der Liste entfernt. Der danach vorkommende Farbwert mit der meisten Häufigkeit ist dann der nächste ausgewählte Farbwert und so weiter. Dieses wird für alle ausgewählten Testbilder durchgeführt. Auf diese Weise werden die Farbwerte, die einen zu geringen Abstand (z.B. Delta E < 0,5) zueinander aufweisen, dezimiert, so dass die Datenbank weiterhin effizient angewendet werden kann.

In einer bevorzugten Ausgestaltung kann vorgesehen sein, dass das digitale Testbild zumindest eine Hauptfarbe des vorgegebenen Digitalbildes umfasst. Unter einer Hauptfarbe des vorgegebenen Digitalbildes ist dabei im Sinne der vorliegenden Erfindung insbesondere ein Farbwert zu verstehen, der einen wesentlichen Anteil am Digitalbild hat.

Bevorzugt kann vorgesehen sein, dass die Hauptfarben ausgewählt werden aus den am häufigsten im vorgegebenen Digitalbild vorkommenden Farben, wobei optional zwischen mehreren Hauptfarben ein Mindestabstand im Farbraum eingehalten wird, und/oder die Hauptfarben unabhängig vom vorgegebenen Digitalbild ausgewählt werden und einen möglichst großen Abstand zwischen den Hauptfarben im Farbraum eingehalten wird. Dadurch kann erreicht werden, dass mit wenigen Hauptfarben Korrekturdaten erhalten werden können, die verschiedene vorgegebene Digitalbilder gut abdecken. Mindestabstände im Farbraum können beispielsweise über einen Delta E-Werte oder mit Hilfe eines Histogramms erreicht werden.

In einer alternativen bevorzugten Ausgestaltung kann vorgesehen sein, dass das digitale Testbild Farbwerte umfasst, die in dem vorgegebenen Digitalbild besonders häufig vorkommen. Bevorzugt kann vorgesehen sein, dass das digitale Testbild Farbwerte des vorgegebenen Digitalbildes umfasst, die den Farbraum des vorgegebenen Digitalbildes besonders gut abdeckt, insbesondere repräsentativ. In einer bevorzugten Ausgestaltung kann vorgesehen sein, dass das digitale Testbild alle Farbwerte des vorgegebenen Digitalbildes umfasst.

Bevorzugt kann vorgesehen sein, dass das Proofdrucker-Farbprofil bereits an das Produkt angepasst ist, besonders bevorzugt auch an den Proofdrucker, den Produktionsdrucker und das Produktionsdrucker-Farbprofil. Darunter ist zu verstehen, dass das Proofdrucker-Farbprofil schon grobe, bzw. üblicherweise verwendete Korrekturen umfasst. Beispielsweise kann das Proofdrucker-Farbprofil ein ICC-Farbprofil umfassen.

Bevorzugt kann vorgesehen sein, dass die Korrekturdaten Korrekturwerte für einzelne Farbwerte des vorgegebenen Digitalbildes umfassen, besonders bevorzugt Korrekturwerte für Farbwerte, die in dem vorgegebenen Digitalbild besonders häufig vorkommen. Bevorzugt kann vorgesehen sein, dass die Korrekturdaten Korrekturwerte für Farbwerte des vorgegebenen Digitalbildes umfassen, die den Farbraum des vorgegebenen Digitalbildes besonders gut abdecken, insbesondere repräsentativ. Dadurch kann erreicht werden, dass die Korrekturdaten besonders gut für das vorgegebene Digitalbild geeignet sind. Somit kann eine besonders gute Simulation des Druckergebnisses erhalten werden.

In einer Ausgestaltung kann vorgesehen sein, dass die Korrekturdaten Korrekturwerte für alle Farbwerte des vorgegebenen Digitalbildes umfassen.

Bevorzugt kann vorgesehen sein, dass die Korrekturdaten Informationen über das Produkt umfassen, insbesondere Informationen über den Druckuntergrund des Bildes und/oder die Nachbehandlung des Produktes nach dem Drucken des Bildes, insbesondere mögliche Kalandrier-, Lackier-, und/oder Strukturier-Schritte. Dadurch kann erreicht werden, dass die Korrekturdaten auch gut für andere bzw. ähnliche vorgegebene Digitalbilder verwendet werden können, sofern das Produkt an sich ähnlich ist. Dadurch kann insbesondere erreicht werden, dass nicht für jedes Produkt neue Korrekturdaten für den Proofdrucker erstellt werden müssen.

Bevorzugt kann vorgesehen sein, dass das Test-Produkt im Wesentlichen nach dem gleichen Verfahren hergestellt wurde, wie das Produkt für dessen Simulation der Farbigkeit der Proofdrucker vorgesehen ist, wobei statt des vorgegebenen Digitalbildes das digitale Testbild gedruckt wurde.

Dadurch kann vorteilhafterweise erreicht werden, dass die Korrekturdaten für den Proofdrucker besonders gut an das zu simulierende Produkt angepasst sind. Somit kann insbesondere die Genauigkeit der Simulation mit dem Proofdrucker verbessert werden.

Bevorzugt kann vorgesehen sein, dass das Test-Produkt durch Drucken des Testbildes mit dem Produktionsdrucker auf Basis von Druckdaten, die aus dem digitalen Testbild unter Anwendung des Produktionsdrucker-Farbprofils erstellt wurden, wobei das Testbild auf den gleichen Druckuntergrund gedruckt wird wie das entsprechende Bild bei der Produktion des Produktes.

Bevorzugt kann vorgesehen sein, dass das Test-Produkt erhalten wird, wobei nach Drucken des Testbildes genau wie bei der Produktion des Produktes nach dem Drucken des Bildes weiter verfahren wird.

Bevorzugt kann vorgesehen sein, dass das Bild des Produktes und/oder Testbild des Test-Produktes mit zumindest einer zumindest teilweise durchsichtigen Deckschicht bedeckt ist, wobei die Deckschicht bevorzugt eine Strukturierung aufweist.

Es konnte überraschenderweise gezeigt werden, dass für derartige Produkte die nach dem Verfahren erstellten Korrekturwerte eine besonders gute Verbesserung der Proofdrucke ermöglichen. Ohne an eine Theorie gebunden zu sein, wird davon ausgegangen, dass bei Produkten, bei denen das Bild mit zumindest einer zumindest teilweise durchsichtigen Deckschicht bedeckt ist, wobei die Deckschicht bevorzugt eine Strukturierung aufweist, besonders schwierig mit einem Proofdrucker anhand üblicher Verfahren und mit Korrekturen über Farbprofile zu simulieren sind. Durch das vorbeschriebene Verfahren können jedoch überraschenderweise auch derartige Produkte gut mit einem Proofdruck nachgestellt werden, weswegen das vorbeschriebene Verfahren besonders große Vorteile für derartige Produkte bietet.

In einer Ausgestaltung kann vorgesehen sein, dass die zumindest teilweise durchsichtigen Deckschicht eine Verschließschutzschicht ist, insbesondere eine Verschleißschutzschicht aufweist dispergierte Partikel. Es konnte gezeigt werden, dass sich das vorbeschriebene Verfahren überraschenderweise auch für derartige Produkte eignet, die ansonsten, womöglich wegen der diffus lichtbrechenden Deckschicht, besonders schwierig zu simulieren sind.

Bevorzugt kann vorgesehen sein, dass das Produkt ein Dekorpaneel ist, vorzugsweise ein Dekorpaneel mit strukturierter Oberfläche.

Es konnte überraschenderweise gezeigt werden, dass auch für derartige Produkte die nach dem Verfahren erstellten Korrekturwerte eine besonders gute Verbesserung der Proofdrucke ermöglichen.

Bevorzugt kann vorgesehen sein, dass das Bestimmen der Farbabweichungen durch Messen der Farbwerte des Test-Proofdruckes und des Testbildes des Test-Produktes mit einem optischen Farbmessgerät erfolgt, wobei insbesondere für die Farbwerte des Test-Proofdruckes und des Testbildes des Test-Produktes dasselbe optische Farbmessgeräte verwendet wird. Entsprechend analog können auch die anderen Farbabweichungen der vorliegenden Erfindung bestimmt werden.

Dadurch kann vorteilhafterweise erreicht werden, dass die erhaltenen Korrekturdaten besonders genau auf die Drucker abgestimmt sind und Messfehler vermieden werden bzw. sich ausgleichen.

Bevorzugt kann vorgesehen sein, dass das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Proofdrucker und/oder Produktionsdrucker beruht.

Es konnte gezeigt werden, dass sich diese Messgeräte besonders gut eignen.

Bevorzugt kann vorgesehen sein, dass das Test-Proofdruck und/oder das Test-Produkt mehrfach gescannt und zwischen zwei Scans um 90° rotiert wird. Auf diese Weise werden Inhomogenitäten der Ausleuchtung vermieden. Zudem können bei unebenen Oberflächen, beispielsweise strukturierte Oberflächen mit Bergen und Tälern, Spitzlichter und Schattenbereiche entstehen, die durch die mehrfache Aufnahme von Referenzbildern ausgeschlossen werden können.

Bevorzugt kann vorgesehen sein, dass das Verfahren weiter die folgenden Schritte umfasst:
VI) Erstellen eines farbkorrigierten digitalen Testbildes auf Basis des digitalen Testbildes und der Korrekturdaten für den Proofdrucker aus Schritt V); und
VII) Durchführen der Schritte I) bis V) mit dem farbkorrigierten digitalen Testbild als digitales Testbild, wobei die dabei erstellten Korrekturdaten für den Proofdrucker mit den zuvor erstellten Korrekturdaten für den Proofdrucker akkumuliert werden;
wobei bevorzugt die Schritte VI) und VII) iterativ mehrfach hintereinander durchgeführt werden, bis die Farbabweichung in Schritt IV) einen Schwellwert unterschreitet und/oder ein Minimum erreicht.

Dadurch kann vorteilhafterweise erreicht werden, dass die Korrekturwerte besonders genau sind und somit weiter eine Genauigkeit der Simulation mit dem Proofdrucker verbessert werden kann und im Ergebnis vor einem Produktionsdruck bessere Korrekturdaten für den Produktionsdrucker bereitgestellt werden können, so dass weniger Testdrucke am Produktionsdrucker notwendig sein können

Im Detail und in anderen Worten werden somit die Verfahrensschritte I) bis V) nochmals durchgeführt, wobei die bereits erhaltenen Korrekturdaten angewendet werden, indem mit ihnen das digitale Testbild an sich farbkorrigiert wird. Im Ergebnis werden neue Korrekturdaten erhalten, die wiederum mit den zuvor bestimmten Korrekturdaten akkumuliert werden, so dass immer genauere Korrekturdaten erhalten werden können, bis keine Verbesserung der Farbabweichung mehr auftritt, oder eine ausreichend gute Farbabweichung gemessen wird.

In einer bevorzugten Ausgestaltung kann vorgesehen sein, dass die mit dem Verfahren erhaltenen Korrekturdaten mit Korrekturdaten aus anderen erfindungsgemäßen Verfahren zur Erstellung von Korrekturdaten für einen Proofdrucker kombiniert werden. Darunter ist insbesondere zu verstehen, dass Korrekturdaten, die für ein digitales Testbild erhalten wurden, mit Korrekturdaten, die für ein anderes digitales Testbild erhalten wurden, kombiniert werden können. Unter dem Kombinieren von Korrekturdaten ist dabei im Sinne der vorliegenden Erfindung zu verstehen, dass die Korrekturwerte für Farbwerte aus einem ersten Verfahren um die Korrekturwerte für Farbwerte aus einem zweiten und ggf. noch weiteren Verfahren ergänzt werden, wobei beispielsweise für Farbwerte, die in mehr als einem Verfahren gemessen wurden die Korrekturwerte gemittelt werden können. Beispielsweise kann in einer Ausgestaltung auch vorgesehen sein, dass beim Kombinieren der Korrekturdaten die Korrekturdaten aus verschiedenen Verfahren geglättet werden.

Dadurch wird in besonders effizienter Weise die Datenbank mit Korrekturwerten aufgebaut. Bevorzugt kann dann vorgesehen sein, dass für einen ersten Proofdruck des digitalen Testbildes Korrekturdaten aus der Datenbank verwendet werden können, um ein farbkorrigiertes digitales Testbild zu erstellen, wobei das Verfahren dann ausgehend von dem farbkorrigierten digitalen Testbild durchgeführt wird. Dadurch kann erreicht werden, dass insgesamt noch weniger Test-Proofdrucke notwendig sind, um ein gutes Ergebnis zu erhalten.

Besonders bevorzugt kann vorgesehen sein, dass Korrekturdaten kombiniert werden unter Berücksichtigung des vorgesehenen Produktes, wobei insbesondere Korrekturdaten kombiniert werden, für vorgesehene Produkte, die mit den gleichen Produktionsschritten hergestellt werden. Darunter ist zu verstehen, dass insbesondere kombinierte Korrekturdaten erstellt werden können für Produkte, die zwar unterschiedliche Bilder auf Basis unterschiedlicher vorgegebener Digitalbilder aufweisen, ansonsten jedoch analog zueinander hergestellt werden. Dadurch kann insbesondere erreicht werden, dass die Korrekturdaten besonders übertragbar auf andere vorgegebene Digitalbilder sind, die für Produkte vorgesehen sind, die ebenfalls gleich hergestellt werden.

Gemäß einer bevorzugten Weiterbildung der Erfindung, umfasst das Verfahren ferner die Korrektur einer Farbwiedergabeeigenschaft des Zieldruckes, mit folgenden dem Schritt g) nachgelagerten Verfahrensschritten:
h) Bestimmung von Farbabweichungen des Proofdruckes von der Farbigkeit des vorgegebenen Digitalbildes; und
i) Erstellen von ersten Korrekturdaten für den Produktionsdrucker auf Basis der bestimmten Farbabweichungen.

Durch das vorbeschriebene Verfahren kann vorteilhafterweise erreicht werden, dass die Korrekturdaten für den Produktionsdrucker besonders genau sind, so dass weniger Testdrucke am Produktionsdrucker notwendig sein können.

In anderen Worten wird nach dem vorbeschriebenen Verfahren also Korrekturdaten für den Produktionsdrucker auf Basis von Farbabweichung eines hergestellten Proofdruckes anhand eines erfindungsgemäßen farbkorrigierten Digitalbildes von dem vorgegebenen Digitalbilde erstellt.

Bevorzugt kann vorgehen sein, dass das Verfahren weiter die folgenden Schritte umfasst:
j) Erstellen eines zweiten farbkorrigierten vorgegebenen Digitalbildes auf Basis des ersten farbkorrigierten vorgegebenen Digitalbildes und der ersten Korrekturdaten für den Produktionsdrucker aus Schritt i); und
k) Durchführen der Schritte f) bis i) mit dem zweiten farbkorrigierten vorgegebenen Digitalbild aus Schritt j) als erstes farbkorrigiertes vorgegebenes Digitalbild, wobei die dabei erstellten ersten Korrekturdaten für den Produktionsdrucker mit den zuvor erstellten ersten Korrekturdaten für den Produktionsdrucker akkumuliert werden,
wobei bevorzugt die Schritte j) und k) iterativ mehrfach hintereinander durchgeführt werden, bis die Farbabweichung in Schritt h) einen Schwellwert unterschreitet und/oder ein Minimum erreicht.

Dadurch kann vorteilhafterweise erreicht werden, dass die Korrekturdaten für den Produktionsdrucker ganz besonders genau sind, so dass noch weniger Testdrucke am Produktionsdrucker notwendig sein können.

In anderen Worten kann vorgesehen sein, dass die aus dem Verfahren erhaltenen ersten Korrekturdaten für den Produktionsdrucker für einen weiteren Proofdruck angewendet werden, wobei die Korrekturdaten für den Proofdrucker auf das bereits mit den Korrekturdaten für den Proofdrucker korrigierte erste farbkorrigierte vorgegebene Digitalbild angewendet werden.

Bevorzugt kann vorgesehen sein, dass das Verfahren weiter die folgenden Schritte umfasst:
l) Erstellen eines dritten farbkorrigierten vorgegebenen Digitalbildes auf Basis des vorgegebenen Digitalbildes und der ersten Korrekturdaten für den Produktionsdrucker aus Schritt i);
m) Erstellen von Druckdaten für den Produktionsdrucker aus dem dritten farbkorrigierten vorgegebenen Digitalbild unter Anwendung des Produktionsdrucker-Farbprofils;
n) zumindest teilweises Erstellen des Produktes umfassend ein Drucken des dritten farbkorrigierten vorgegebenen Digitalbildes mit dem Produktionsdrucker auf Basis der erstellten Druckdaten;
o) Bestimmung von Farbabweichungen des Produktes von der Farbigkeit des vorgegebenen Digitalbildes; und
p) Erstellen von zweiten Korrekturdaten für den Produktionsdrucker auf Basis der bestimmten Farbabweichungen und der ersten Korrekturdaten für den Produktionsdrucker.

Dadurch kann vorteilhafterweise erreicht werden, dass die Korrekturdaten noch genau werden.

Im in anderen Worten kann vorgesehen sein, dass ein Produktionsdruck durchgeführt wird, wobei dem Produktionsdruck das vorgegebene Digitalbild zu Grunde gelegt wird, welches mit den zuvor erhaltenen ersten Korrekturdaten für den Produktionsdrucker farbkorrigiert wird, wobei das dritte farbkorrigierte vorgegebene Digitalbild erhalten wird. Insbesondere wird in Verfahrensschritt l) nicht das erste oder zweite farbkorrigierte Digitalbild zu Grunde gelegt, weswegen keine Korrekturdaten für den Proofdrucker verwendet werden.

Bevorzugt kann vorgesehen sein, dass in Schritt n) das Produkt zumindest so weit Erstellt wird, dass eine Veränderung des Farbeindruckes des Bildes nicht mehr zu erwarten ist. Besonders bevorzugt kann vorgesehen sein, dass in Schritt n) das Produkt vollständig hergestellt wird. Dadurch kann erreicht werden, dass die bestimmten Farbabweichungen und erhaltenen Korrekturdaten für das Produkt besonders repräsentativ sind, so dass das bei einem Produktionsdruck der Farbeindruck des Produktes besonders genau dem des vorgegebenen Digitalbild entspricht.

Bevorzugt kann vorgesehen sein, dass das Verfahren weiter die folgenden Schritte umfasst:
q) Erstellen eines vierten farbkorrigierten vorgegebenen Digitalbildes auf Basis des vorgegebenen Digitalbildes und der zweiten Korrekturdaten für den Produktionsdrucker aus Schritt p);
r) Durchführen der Schritte m) bis p) mit dem vierten farbkorrigierten vorgegebenen Digitalbild aus Schritt q) als drittes farbkorrigiertes vorgegebenes Digitalbild, wobei die dabei erstellten zweiten Korrekturdaten auf Basis der bestimmten Farbabweichungen und der vorherigen zweiten Korrekturdaten erstellt werden,
wobei bevorzugt die Schritte q) und r) iterativ mehrfach hintereinander durchgeführt werden, bis die Farbabweichung in Schritt o) einen Schwellwert unterschreitet und/oder ein Minimum erreicht.

Dadurch kann vorteilhafterweise erreicht werden, dass die Korrekturdaten noch genauer werden.

In anderen Worten werden somit die Verfahrensschritte m) bis p) nochmals durchgeführt, wobei die bereits erhaltenen Korrekturdaten angewendet werden, indem mit ihnen das vorgegebenen Digitalbild weiter farbkorrigiert wird. Im Ergebnis werden neue Korrekturdaten erhalten, die wiederum mit den zuvor bestimmten Korrekturdaten akkumuliert werden, so dass immer genauere Korrekturdaten erhalten werden können, bis keine Verbesserung der Farbabweichung mehr auftritt, oder eine ausreichend gute Farbabweichung gemessen wird.

Bevorzugt kann vorgesehen sein, dass das Verfahren weiter die folgenden Schritte umfasst:
I) Erstellen eines farbkorrigierten vorgegebenen Digitalbildes auf Basis des vorgegebenen Digitalbildes und von Korrekturdaten für den Produktionsdrucker;
II) Erstellen von Druckdaten für den Produktionsdrucker aus dem farbkorrigierten vorgegebenen Digitalbild unter Anwendung des Produktionsdrucker-Farbprofils; und
III) Erzeugung eines Produktionsdruckes mit dem Produktionsdrucker auf Basis der erstellten Druckdaten.

Durch das vorbeschriebene Verfahren kann vorteilhafterweise ein Produkt erhalten werden, dass vom Farbeindruck besonders genau dem vorgegebenen Digitalbild entspricht.

In anderen Worten wird nach dem vorbeschriebenen Verfahren also ein Produktionsdruck des vorgegebenen Digitalbildes hergestellt, wobei die nach dem vorbeschriebenen Verfahren aus Schritt i) oder p) erhaltenen Korrekturdaten für den Produktionsdrucker auf das vorgegebene Digitalbild angewendet werden.

Weitere Vorteile und vorteilhafte Ausgestaltungen der erfindungsgemäßen Verfahren werden durch die Figuren veranschaulicht und in der nachfolgenden Beschreibung erläutert. Dabei ist zu beachten, dass die Figuren nur beschreibenden Charakter haben und nicht dazu gedacht sind, die Erfindung in irgendeiner Form einzuschränken.

Es zeigen
Fig. 1
Fig. 2 schematisch den Ablauf des erfindungsgemäßen Verfahrens zur Erstellung von Korrekturdaten für einen Proofdrucker nach einer bevorzugten Ausgestaltung,
Fig. 3 schematisch den Ablauf des erfindungsgemäßen Verfahrens zur Erstellung eines Proofdruckes nach einer bevorzugten Ausgestaltung,
Fig. 4 schematisch den Ablauf des erfindungsgemäßen Verfahrens zur Erstellung von Korrekturdaten für einen Produktionsdrucker nach einer bevorzugten Ausgestaltung, und
Fig. 5 schematisch den Ablauf des erfindungsgemäßen Verfahrens zum Drucken eines vorgegebenen Digitalbildes für ein Produkt mit einem Produktionsdrucker nach einer bevorzugten Ausgestaltung.

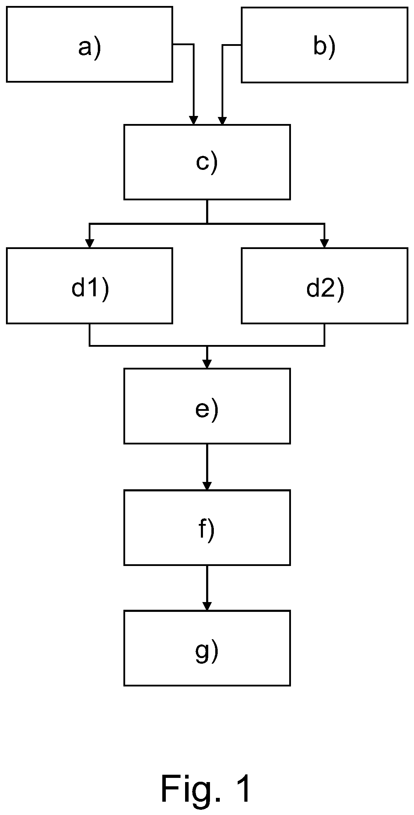

Fig. 1 zeigt schematisch den Ablauf des erfindungsgemäßen Verfahrens zur Korrektur einer Farbwiedergabeeigenschaft eines Proofdruckes, wobei der Proofdruck eines vorgegebenen Digitalbildes mittels eines Proofdruckers mit vorbestimmtem Proofdruck-Farbprofil erzeugt wird und der Proofdruck die Farbigkeit eines mit einem Produktionsdrucker erzeugbaren Zieldruckes desselben Digitalbildes simuliert. Der Proofdruck ist zur Simulation der Farbigkeit eines Produktes vorgesehen, wobei das Produkt zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden.

In einem ersten Schritt a) wird vorab eine Datenbank bereitgestellt. Die Datenbank umfasst eine vorgegebene Anzahl an Datenpaaren. Ein Datenpaar besteht aus einem Start-Farbwert und einen dazugehörigen Ziel-Farbwert. Der Ziel-Farbwert ergibt sich aus dem Start-Farbwert und Korrekturdaten. Die Korrekturdaten passen den Start-Farbwert derart an, dass der gedruckte Ziel-Farbwert dem Start-Farbwert simuliert und druckerabhängige Abweichungen korrigiert werden.

Das zu druckende Digitalbild wird in einem weiteren Schritt b) bereitgestellt und in eine Vielzahl von Bildpixeln aufgeteilt.

Anschließend wird in Schritt c) für jeden Bildpixel der Farbwert, also der Eingangs-Farbwert bestimmt.

Anschließend gibt es zwei Alternativen: In Schritt d1) ist der ermittelte Eingangs-Farbwert als Start-Farbwert in der Datenbank geführt. Dann kann anhand der Datenpaare für den Eingangs-Farbwert der dazugehörige Ziel-Farbwert ermittelt und bereitgestellt werden. In Schritt d2) ist für den ermittelten Eingangs-Farbwert kein Start-Farbwert hinterlegt. In diesem Fall werden die Start-Farbwerte der Datenbank ermittelt, die dem Eingangs-Farbwert am nächsten kommen. Dazu wird der räumliche Abstand zwischen den Farbwerten in einem dreidimensionalen Farbraum ermittelt. Ist der räumliche Abstand, also die Vektorlänge, kleiner als ein Grenzwert, beispielsweise 3, wird der Start-Farbwert und der dazugehörige Ziel-Farbwert berücksichtigt. Die Ziel-Farbwerte werden dann gemäß inverser Abstandsgewichtung interpoliert. Der daraus entstehende Ziel-Farbwert wird dann bereitgestellt.

Die bereitgestellten Ziel-Farbwerte aus den Schritten d1) und d2) werden anschließend in Schritt e) verwendet, um ein farbkorrigiertes Digitalbild zu erstellen.

Im nächsten Schritt g) werden dann Druckdaten für den Proofdrucker aus dem ersten farbkorrigierten vorgegebenen Digitalbild unter Anwendung des Proofdrucker-Farbprofils erstellt und der Proofdruck in Schritt g) mit dem Proofdrucker auf Basis der erstellten Druckdaten erzeugt.

Durch das Verfahren weist der Proofdruck eine Farbigkeit auf, die besonders gut die Farbigkeit eines Produktes simuliert.

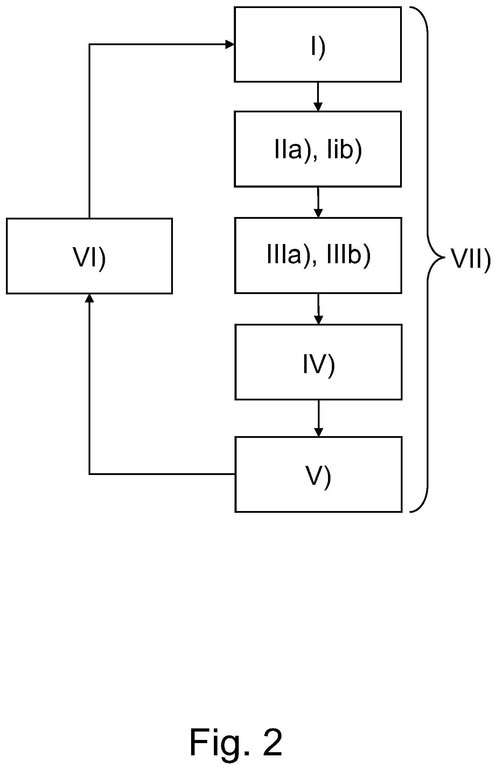

Fig. 2 zeigt schematisch den Ablauf des Verfahrens gemäß einem bevorzugten Ausführungsbeispiel der Erfindung zur Ermittlung von Korrekturdaten für einen Proofdrucker. Die Korrekturdaten sind dafür vorgesehen die Farbigkeit eines Produktes zu simulieren, welches zumindest ein Bild umfasst, das mit einem Produktionsdrucker auf Basis von Druckdaten gedruckt wird, die aus einem vorgegebenen Digitalbild unter Anwendung eines Produktionsdrucker-Farbprofils erstellt werden.

In einem ersten Schritt I) wird dabei ein digitales Testbild bereitgestellt. Dieses kann beispielsweise auf Basis des vorgegebenen Digitalbildes bereitgestellt werden und Farbfelder aufweisen, die jeweils einem Farbwert aufweisen, der im vorgegebenen Digitalbild besonders häufig vorkommt.

In den weiteren Schritten IIa) und IIb) werden dann Druckdaten für den Produktionsdrucker aus dem digitalen Testbild unter Anwendung eines Produktionsdrucker-Farbprofils erstellt ein Test-Produkt mit dem Produktionsdrucker auf Basis der erstellten Druckdaten erzeugt.

In den weiteren Schritten IIIa) und IIIb) werden dann Druckdaten für den Proofdrucker aus dem digitalen Testbild unter Anwendung eines Proofdrucker-Farbprofils erstellt ein Test-Proofdruck mit dem Proofdrucker auf Basis der erstellten Druckdaten erzeugt. Das Proofdrucker-Farbprofil kann dabei bereits Korrekturen für den Proofdrucker umfassen, beispielsweise als ICC-Farbprofil.

Im darauffolgenden Schritt IV) werden dann Farbabweichungen des Test-Proofdruckes von der Farbigkeit eines Test-Produktes bestimmt, wobei das Test-Produkt zumindest ein Testbild umfasst, das mit dem Produktionsdrucker auf Basis von Druckdaten gedruckt wurde, die aus dem digitalen Testbild unter Anwendung des Produktionsdrucker-Farbprofils erstellt wurden. Dabei kann insbesondere das Test-Produkt im Wesentlichen nach dem gleichen Verfahren hergestellt worden sein, wie das Produkt für dessen Simulation der Farbigkeit der Proofdrucker vorgesehen ist, wobei statt des vorgegebenen Digitalbildes das digitale Testbild gedruckt wurde.

Farbabweichungen können dabei beispielsweise durch Messen der Farbwerte des Test-Proofdruckes und des Testbildes des Test-Produktes mit einem optischen Farbmessgerät erfolgt, wobei insbesondere für die Farbwerte des Test-Proofdruckes und des Testbildes des Test-Produktes dasselbe optische Farbmessgeräte verwendet wird.

In Schritt V) werden dann Korrekturdaten für den Proofdrucker auf Basis der bestimmten Farbabweichungen erstellt.

Diese Korrekturdaten können dann in Schritt VI) zur Erstellung eines farbkorrigierten digitalen Testbildes verwendet werden, dass dann als digitales Testbild wieder in schritt I) bereitgestellt wird. Verfahrensschritte I) bis V) werden dann als Schritt VII) mit dem farbkorrigierten digitalen Testbild als digitales Testbild erneut durchgeführt.

Insbesondere wird das Verfahren mit den Schritten VI) und VII) dabei so lange wiederholt, bis die Farbabweichung in Schritt V) einen Schwellwert unterschreitet oder ein Minimum erreicht.

Durch das Verfahren sind die Korrekturdaten für den Proofdrucker besonders gut dafür geeignet die Farbigkeit eines Produktes zu simulieren.

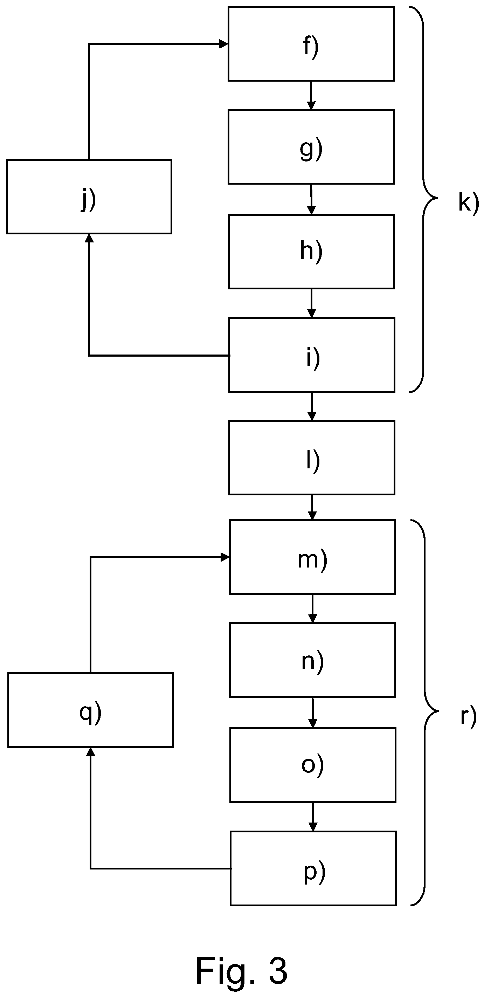

Fig. 3 zeigt schematisch den Ablauf des Verfahrens gemäß einer bevorzugten Ausgestaltung der Erfindung zur Korrektur einer Farbwiedergabeeigenschaft des Zieldruckes.

In den ersten Schritten f) und g) wird zumindest ein Proofdruck nach dem Verfahren erstellt, beispielsweise wie in Fig. 1 dargestellt. Anschließend wird in Schritt h) die Farbabweichung des Proofdruckes von der Farbigkeit des vorgegebenen Digitalbildes bestimmt. In einem weiteren Schritt i) werden dann erste Korrekturdaten für den Produktionsdrucker auf Basis der bestimmten Farbabweichungen erstellt.

In der dargestellten Ausgestaltung wird dann auf Basis dieser ersten Korrekturdaten und des ersten farbkorrigierten vorgegebenen Digitalbildes in einem Schritt j) ein zweites farbkorrigiertes vorgegebenes Digitalbild erstellt. Dieses zweite farbkorrigierte vorgegebene Digitalbild wird dann als erstes farbkorrigiertes Digitalbild als Schritt k) wieder in den Schritten f) bis i) verwendet. Die erstellten ersten Korrekturdaten für den Produktionsdrucker werden dabei mit den zuvor erstellten ersten Korrekturdaten für den Produktionsdrucker akkumuliert.

In der dargestellten Ausgestaltung werden die Schritte k) und j) dann so lange iterativ durgeführt, biss in Schritt i) die Farbabweichung einen Schwellwert unterschreitet oder ein Minimum erreicht hat.

Anschließend wird in der dargestellten Ausgestaltung von dem Proofdrucker auf den Produktionsdrucker gewechselt. Dabei wird in Schritt l) ein drittes farbkorrigiertes vorgegebenes Digitalbild auf Basis des vorgegebenen Digitalbildes (nicht auf Basis des ersten oder zweiten farbkorrigierten vorgegebenen Digitalbildes) und der ersten Korrekturdaten für den Produktionsdrucker aus Schritt i) erstellt.

Im anschließenden Schritt m) werden dann Druckdaten für den Produktionsdrucker aus dem dritten farbkorrigierten vorgegebenen Digitalbild erstellt, wobei das Produktionsdrucker-Farbprofil angewendet wird.

In einem Schritt n) wird dann zumindest teilweise das Produkt erstellt, wobei der Schritt ein Drucken des dritten farbkorrigierten vorgegebenen Digitalbildes mit dem Produktionsdrucker auf Basis der erstellten Druckdaten umfasst. In einer Ausgestaltung wird dabei das Produkt hergestellt, wie es später auch im Produktionsverfahren hergestellt wird.

In Schritt o) wird dann die Farbabweichung des Produktes von der Farbigkeit des vorgegebenen Digitalbildes bestimmt, woraufhin in Schritt p) zweite Korrekturdaten für den Produktionsdrucker auf Basis der bestimmten Farbabweichungen und der ersten Korrekturdaten für den Produktionsdrucker erstellt werden. Somit berücksichtigen die zweiten Korrekturdaten für den Produktionsdrucker die in Schritt i) erhaltenen Korrekturdaten und die durch die Schritte m) bis p) weiter verfeinerten Korrekturdaten.

In der gezeigten Ausgestaltung wird dann in einem Schritt q) ein viertes farbkorrigiertes vorgegebenes Digitalbild auf Basis des vorgegebenen Digitalbildes und der zweiten Korrekturdaten für den Produktionsdrucker aus Schritt p) erstellt.

Unter Verwendung des vierten farbkorrigierten vorgegebenen Digitalbildes als drittes vorgegebenes Digitalbild werden dann in einem Schritt r) die Schritte m) bis p) durchgeführt, wobei die in Schritt p) erstellten zweiten Korrekturdaten auf Basis der bestimmten Farbabweichungen und der vorherigen zweiten Korrekturdaten erstellt werden.

In der dargestellten Ausgestaltung werden die Schritte r) und q) dann so lange iterativ durgeführt, bis in Schritt o) die Farbabweichung einen Schwellwert unterschreitet oder ein Minimum erreicht hat.

Durch das vorbeschriebene Verfahren können besonders geringe Farbabweichungen des Produktes erreicht werden, wobei die Anzahl der Iterationen von Verfahrensschritten k) und j vergleichsweise gering gehalten werden kann und insbesondere die Anzahl der besonders aufwändigen Iterationen der Verfahrensschritte r) und q) ganz besonders gering gehalten werden kann.

Beispielsweise können mit dem vorbeschriebenen Verfahren Korrekturdaten für farbgetreue Dekorpaneele hergestellt werden, die eine strukturierte Verschleißschutzschicht aufweisen, wobei die Schritte q) und r) weniger als 5 mal durchgeführt werden müssen, wobei mit bisher bekannten Verfahren mehr als etwa 20 Produktionsdrucke als Test notwendig sein können um zufriedenstellende Ergebnisse zu erhalten.

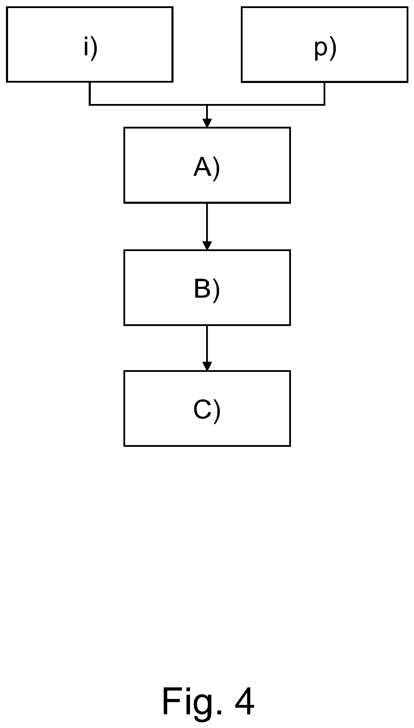

Fig. 4 zeigt schematisch den Ablauf des Verfahrens gemäß einem bevorzugten Ausführungsbeispiel der Erfindung zum Drucken eines vorgegebenen Digitalbildes für ein Produkt mit einem Produktionsdrucker.

Zuerst werden die ersten und zweiten Korrekturdaten aus den Schritten i) und p) bereitgestellt.

In einem Schritt I) wird dann ein farbkorrigiertes vorgegebenen Digitalbild auf Basis des vorgegebenen Digitalbildes erstellt. Dabei werden Korrekturdaten für den Produktionsdrucker verwendet, die nach dem erfindungsgemäßen Verfahren erhalten wurden. Beispielsweise werden die ersten Korrekturdaten für den Produktionsdrucker aus Schritt i), insbesondere nach erfolgter Iteration der Schritte k) und j), oder die zweiten Korrekturdaten für den Produktionsdrucker aus Schritt p), insbesondere nach erfolgter Iteration der Schritte r) und q), verwendet.

Der so erstellte Produktionsdruck weist als fertiges Produkt besonders geringe Farbabweichungen zum vorgegebenen Digitalbild auf.

## Patentansprüche

1. Verfahren zum Erstellen eines Proofdruckes, wobei der Proofdruck eines vorgegebenen Digitalbildes mittels eines Proofdruckers mit vorbestimmtem Proofdruck-Farbprofil erzeugt wird und der Proofdruck die Farbigkeit eines mit einem Produktionsdrucker mit vorbestimmten Produktionsdrucker-Farbprofil erzeugbaren Zieldruckes desselben Digitalbildes simuliert, mit folgenden Verfahrensschritten:
a) vorab Bereitstellen einer eine vorbestimmte Anzahl an Datenpaaren aus Start-Farbwert und Ziel-Farbwert umfassende Datenbank, wobei der Ziel-Farbwert der mittels eines Korrekturwertes korrigierte Start-Farbwert ist, wobei der Korrekturwert aus einer Farbabweichungen eines Test-Proofdrucks des Proofdruckers von einem Test-Produkt des Produktionsdrucker für den Start-Farbwert bestimmt ist;
b) Bereitstellen des Digitalbildes und Einteilen des Digitalbildes in eine Vielzahl von Bildpixeln;
c) Pro Bildpixel Bestimmen eines Eingangs-Farbwertes und Überprüfen, ob die Datenbank für den jeweiligen Eingangs-Farbwert einen Start-Farbwert aufweist;
d1) wenn die Datenbank für den jeweiligen Eingangs-Farbwert einen Start-Farbwert aufweist, dann bereitstellen des dazugehörigen Ziel-Farbwertes;
d2) wenn die Datenbank für den jeweiligen Eingangs-Farbwert keinen Start-Farbwert aufweist, dann Bestimmen von wenigstens zwei dem jeweiligen Eingangs-Farbwert nächstgelegenen Start-Farbwerten, Interpolieren eines Ziel-Farbwertes anhand der nächstgelegenen Start-Farbwerte und Bereitstellen des interpolierten Ziel-Farbwertes;
e) Erstellen eines farbkorrigierten vorgegebenen Digitalbildes auf Basis der bereitgestellten Ziel-Farbwerte;
f) Erstellen von Druckdaten für den Proofdrucker aus dem farbkorrigierten vorgegebenen Digitalbild unter Anwendung des Proofdrucker-Farbprofils; und
g) Erzeugen eines Proofdruckes mit dem Proofdrucker auf Basis der erstellten Druckdaten.

2. Verfahren nach Anspruch 1, wobei die Farbwerte in einem dreidimensionalen Farbraum, vorzugsweise im Lab-Farbraum, dargestellt werden, und der nächstgelegene Start-Farbwert einen räumlichen Abstand kleiner oder gleich einem vorbestimmten Grenzwert zu dem Eingangs-Farbwert aufweist.

3. Verfahren nach Anspruch 2, wobei bei der Interpolation des Ziel-Farbwertes die Start-Farbwerte entsprechend der räumlichen Abstände zu dem Eingangs-Farbwert gewichtet werden.

4. Verfahren nach einem der vorherigen Ansprüche, wobei die Korrekturdaten für den Proofdrucker mit vorbestimmten Proofdrucker-Farbprofil und einen Produktionsdrucker mit vorbestimmten Produktionsdrucker-Farbprofil mittels folgender Verfahrensschritte ermittelt werden:
I) Bereitstellen eines digitalen Testbildes aufweisend mehrere Eingangs-Farbwerte;
IIa) Erstellen von Druckdaten für den Produktionsdrucker aus dem digitalen Testbild unter Anwendung des Produktionsdrucker-Farbprofils;
IIb) Erzeugen eines Test-Produkts mit dem Produktionsdrucker auf Basis der erstellten Druckdaten für den Produktionsdrucker;
IIIa) Erstellen von Druckdaten für den Proofdrucker aus dem digitalen Testbild unter Anwendung des Proofdrucker-Farbprofils;
IIIb) Erzeugen eines Test-Proofdruckes mit dem Proofdrucker auf Basis der erstellten Druckdaten für den Proofdrucker;
IV) Bestimmen von Farbabweichungen des Test-Proofdruckes pro Eingangs-Farbwert des Test-Produktes;
V) Ermitteln von Korrekturdaten für den Proofdrucker auf Basis der bestimmten Farbabweichungen pro Eingangs-Farbwert;

5. Verfahren nach Anspruch 4, wobei das Test-Produkt im Wesentlichen nach dem gleichen Verfahren hergestellt wurde wie das Produkt für dessen Simulation der Farbigkeit der Proofdrucker vorgesehen ist, wobei statt des vorgegebenen Digitalbildes das digitale Testbild gedruckt wurde.

6. Verfahren nach einem der Ansprüche 4 oder 5, wobei das Bild des Produktes und/oder Testbild des Test-Produktes mit zumindest einer zumindest teilweise durchsichtigen Deckschicht bedeckt ist, wobei die Deckschicht bevorzugt eine Strukturierung aufweist.

7. Verfahren nach einem der Ansprüche 4 bis 6, wobei das digitale Testbild auf Basis des vorgegebenen Digitalbild bereitgestellt wird, wobei bevorzugt das digitale Testbild Farbfelder aufweist, die jeweils einen Farbwert aufweisen, der im vorgegebenen Digitalbild besonders häufig vorkommt.

8. Verfahren nach einem der Ansprüche 4 bis 7, wobei das Bestimmen der Farbabweichungen durch Messen der Farbwerte des Test-Proofdruckes und des Testbildes des Test-Produktes mit einem optischen Farbmessgerät erfolgt, wobei insbesondere für die Farbwerte des Test-Proofdruckes und des Testbildes des Test-Produktes dasselbe optische Farbmessgeräte verwendet wird.

9. Verfahren nach einem der Ansprüche 4 bis 8, wobei das Verfahren weiter die folgenden Schritte umfasst:
VI) Erstellen eines farbkorrigierten digitalen Testbildes auf Basis des digitalen Testbildes und der Korrekturdaten für den Proofdrucker aus Schritt V); und
VII) Durchführen der Schritte I) bis V) mit dem farbkorrigierten digitalen Testbild als digitales Testbild, wobei die dabei erstellten Korrekturdaten für den Proofdrucker mit den zuvor erstellten Korrekturdaten für den Proofdrucker akkumuliert werden;
wobei bevorzugt die Schritte VI) und VII) iterativ mehrfach hintereinander durchgeführt werden, bis die Farbabweichung in Schritt IV) einen Schwellwert unterschreitet und/oder ein Minimum erreicht.

10. Verfahren nach einem der Anspruch 1 bis 9 ferner zur Korrektur einer Farbwiedergabeeigenschaft des Zieldruckes, mit folgenden dem Schritt g) nachgelagerten Verfahrensschritten:
h) Bestimmung von Farbabweichungen des Proofdruckes von der Farbigkeit des vorgegebenen Digitalbildes; und
i) Erstellen von ersten Korrekturdaten für den Produktionsdrucker auf Basis der bestimmten Farbabweichungen.

11. Verfahren nach Anspruch 10, mit folgenden weiteren Verfahrensschritten:
j) Erstellen eines zweiten farbkorrigierten vorgegebenen Digitalbildes auf Basis des ersten farbkorrigierten vorgegebenen Digitalbildes und der ersten Korrekturdaten für den Produktionsdrucker aus Schritt i); und
k) Durchführen der Schritte f) bis i) mit dem zweiten farbkorrigierten vorgegebenen Digitalbild aus Schritt j) als erstes farbkorrigiertes vorgegebenes Digitalbild, wobei die dabei erstellten ersten Korrekturdaten für den Produktionsdrucker mit den zuvor erstellten ersten Korrekturdaten für den Produktionsdrucker akkumuliert werden,
wobei bevorzugt die Schritte j) und k) iterativ mehrfach hintereinander durchgeführt werden, bis die Farbabweichung in Schritt h) einen Schwellwert unterschreitet und/oder ein Minimum erreicht.

12. Verfahren nach einem der Ansprüche 10 oder 11, wobei das Verfahren weiter die folgenden Schritte umfasst:
l) Erstellen eines dritten farbkorrigierten vorgegebenen Digitalbildes auf Basis des vorgegebenen Digitalbildes und der ersten Korrekturdaten für den Produktionsdrucker aus Schritt i);
m) Erstellen von Druckdaten für den Produktionsdrucker aus dem dritten farbkorrigierten vorgegebenen Digitalbild unter Anwendung des Produktionsdrucker-Farbprofils;
n) zumindest teilweises Erstellen des Produktes umfassend ein Drucken des dritten farbkorrigierten vorgegebenen Digitalbildes mit dem Produktionsdrucker auf Basis der erstellten Druckdaten;
o) Bestimmung von Farbabweichungen des Produktes von der Farbigkeit des vorgegebenen Digitalbildes; und
p) Erstellen von zweiten Korrekturdaten für den Produktionsdrucker auf Basis der bestimmten Farbabweichungen und der ersten Korrekturdaten für den Produktionsdrucker.

13. Verfahren nach Anspruch 12, wobei das Verfahren weiter die folgenden Schritte umfasst:
q) Erstellen eines vierten farbkorrigierten vorgegebenen Digitalbildes auf Basis des vorgegebenen Digitalbildes und der zweiten Korrekturdaten für den Produktionsdrucker aus Schritt p);
r) Durchführen der Schritte m) bis p) mit dem vierten farbkorrigierten vorgegebenen Digitalbild aus Schritt q) als drittes farbkorrigiertes vorgegebenes Digitalbild, wobei die dabei erstellten zweiten Korrekturdaten auf Basis der bestimmten Farbabweichungen und der vorherigen zweiten Korrekturdaten erstellt werden,
wobei bevorzugt die Schritte q) und r) iterativ mehrfach hintereinander durchgeführt werden, bis die Farbabweichung in Schritt o) einen Schwellwert unterschreitet und/oder ein Minimum erreicht.

14. Verfahren nach einem der Ansprüche 10 bis 13, mit folgenden weiteren Verfahrensschritten:
A) Erstellen eines farbkorrigierten vorgegebenen Digitalbildes auf Basis des vorgegebenen Digitalbildes und der Korrekturdaten für den Produktionsdrucker;
B) Erstellen von Druckdaten für den Produktionsdrucker aus dem farbkorrigierten vorgegebenen Digitalbild unter Anwendung des Produktionsdrucker-Farbprofils; und
C) Erzeugung eines Produktionsdruckes mit dem Produktionsdrucker auf Basis der erstellten Druckdaten.

## Claims

1. A method for generating a proof print, wherein the proof print of a specified digital image is produced by means of a proof printer with a predetermined proof print color profile, and the proof print simulates the colorfulness of a target print of the same digital image, which a production printer with a predetermined production printer color profile is capable of producing, including the following method steps:
a) providing, in advance, a database comprising a predetermined number of data pairs which include a start color value and a proof printer target color value, wherein the proof printer target color value includes a start color value corrected by means of correction data,
wherein the correction value is determined from a color deviation of a test proof print of the proof printer from a test product of the production printer for the starting color value
;
b) providing the digital image and dividing the digital image into a plurality of image pixels;
c) for each image pixel, determining an input color value and checking whether the database has a start color value for the respective input color value;
d1) if the database has the start color value for the respective input color value, providing the associated proof printer target color value;
d2 if the database does not have the start color value for the respective input color value, determining at least two start color values closest to the respective input color value, interpolating a proof printer target color value based on the closest start color values, and providing the interpolated proof printer target color value;
e) creating a color-corrected specified digital image based on the provided proof printer target color values;
f) creating print data for the proof printer from the color corrected predetermined digital image using the proof printer color profile; and
g) generating a proof print with the proof printer based on the created print data.

2. The method according to claim 1, wherein the color values are represented in a three-dimensional color space, preferably in the Lab color space, and the nearest start color value has a spatial distance to the input color value smaller than or equal to a predetermined threshold value.

3. The method according to claim 2, wherein, in the interpolation of the proof printer target color value, the start color values are weighted according to their spatial distance to the input color value.

4. The method according to any of the previous claims, wherein the correction data for the proof printer with the predetermined proof printer color profile and a production printer with a predetermined production printer color profile are obtained by the following method steps:
I) providing a digital test image having multiple input color values;
IIa) creating print data for the production printer from the digital test image using the production printer color profile;
IIb) generating a test product with the production printer based on the created print data for the production printer;
IIIa) creating print data for the proof printer from the digital test image using the proof printer color profile;
IIIb) generating a test proof print with the proof printer based on the created print data for the proof printer;
IV) determining color deviations of the test proof print for each input color value of the test product;
V) obtaining correction data for the proof printer based on the determined color deviations for each input color value.

5. The method according to claim 4, wherein the test product was manufactured by substantially the same method as the product for whose simulation of colorfulness the proof printer is intended, wherein, instead of the specified digital image, the digital test image was printed.

6. The method according to any of claims 4 or 5, wherein the image of the product and/or the test image of the test product is covered with at least one at least partially transparent cover layer, wherein the cover layer is preferably structured.

7. The method according to any of the claims 4 to 6, wherein the digital test image is provided based on the specified digital image, the digital test image preferably has color fields, each having a color value that occurs particularly frequently in the specified digital image.

8. The method according to any of claims 4 to 7, wherein the determining of the color deviations is performed by measuring the color values of the test proof print and the test image of the test product with an optical color measuring device, wherein, in particular for the color values of the test proof print and the test image of the test product, the same optical color measuring device is used.

9. The method according to any of claims 4 to 8, wherein the method further includes the following steps:
VI) creating a color-corrected digital test image based on the digital test image and the correction data for the proof printer from step V); and
VII) performing steps I) to V) with the color-corrected digital test image as the digital test image, wherein the correction data for the proof printer created therein is accumulated with the previously created correction data for the proof printer;
wherein preferably steps VI) and VII) are performed iteratively multiple times in succession until the color deviation in step IV) is smaller than a threshold value and/or reaches a minimum.

10. The method according to any of the claims 4 to 9, further including, for correcting a color reproduction characteristic of the target print, the following method steps after step g):
h) determining color deviations of the proof print from the colorfulness of the specified digital image; and
i) creating first correction data for the production printer based on the determined color deviations.

11. The method according to claim 10, further including the following method steps:
j) creating a second color-corrected specified digital image based on the first color-corrected specified digital image and the first correction data for the production printer from step i); and
k) performing steps f) to i) with the second color-corrected specified digital image from step j) as the first color-corrected specified digital image, wherein the first correction data for the production printer created therein is accumulated with the previously created first correction data for the production printer,
wherein preferably steps j) and k) are performed iteratively multiple times in succession until the color deviation in step h) is smaller than a threshold value and/or reaches a minimum.

12. The method according to any of claims 10 or 11, wherein the method further includes the following steps:
l) creating a third color-corrected specified digital image based on the specified digital image and the first correction data for the production printer from step i);
m) creating print data for the production printer from the third color-corrected specified digital image using the production printer color profile;
n) at least partially creating the product including printing the third color-corrected specified digital image with the production printer based on the created print data;
o) determining color deviations of the product from the colorfulness of the specified digital image; and
p) creating second correction data for the production printer based on the determined color deviations and the first correction data for the production printer.

13. The method according to claim 12, wherein the method further includes the following steps:
q) creating a fourth color-corrected specified digital image based on the specified digital image and the second correction data for the production printer from step p);
r) performing the steps m) to p) with the fourth color-corrected specified digital image from step q) as the third color-corrected specified digital image, wherein the second correction data created therein is created based on the determined color deviations and the previous second correction data,
wherein preferably steps q) and r) are performed iteratively multiple times in succession until the color deviation in step o) is smaller than a threshold value and/or reaches a minimum.

14. The method according to any of the claims 10 to 13, further including the following method steps:
A) creating a color-corrected specified digital image based on the specified digital image and the correction data for the production printer;
B) creating print data for the production printer from the color-corrected specified digital image using the production printer color profile; and
C) generating a production print with the production printer based on the created print data.

## Revendications

1. Procédé de génération d'une épreuve, dans lequel l'épreuve d'une image numérique spécifiée est produite au moyen d'une imprimante d'épreuvage avec un profil de couleur d'épreuve prédéterminé, et l'épreuve simule la vivacité d'une impression cible de la même image numérique, qu'une imprimante de production avec un profil de couleur d'imprimante de production prédéterminé est capable de produire, incluant les étapes de procédé suivantes :
a) fournir, en avance, une base de données comprenant un nombre prédéterminé de paires de données qui incluent une valeur de couleur de départ et une valeur de couleur cible d'imprimante d'épreuvage, dans lequel la valeur de couleur cible d'imprimante d'épreuvage inclut une valeur de couleur de départ corrigée au moyen de données de correction,
dans lequel la valeur de correction est déterminée à partir d'un écart de couleur d'une épreuve d'essai de l'imprimante d'épreuvage à partir d'un produit d'essai de l'imprimante de production pour la valeur de couleur de départ ;
b) fournir l'image numérique et diviser l'image numérique en une pluralité de pixels d'image ;
c) pour chaque pixel d'image, déterminer une valeur de couleur d'entrée et vérifier si la base de données a une valeur de couleur de départ pour la valeur de couleur d'entrée respective ;
d1) si la base de données a la valeur de couleur de départ pour la valeur de couleur d'entrée respective, fournir la valeur de couleur cible d'imprimante d'épreuvage associée ;
d2) si la base de données n'a pas la valeur de couleur de départ pour la valeur de couleur d'entrée respective, déterminer au moins deux valeurs de couleur de départ les plus proches de la valeur de couleur d'entrée respective, interpoler une valeur de couleur cible d'imprimante d'épreuvage en se basant sur les valeurs de couleur de départ les plus proches, et fournir la valeur de couleur cible d'imprimante d'épreuvage interpolée ;
e) créer une image numérique spécifiée corrigée pour les couleurs en se basant sur les valeurs de couleur cible d'imprimante d'épreuvage fournies ;
f) créer des données d'impression pour l'imprimante d'épreuvage à partir de l'image numérique prédéterminée corrigée pour les couleurs en utilisant le profil de couleur de l'imprimante d'épreuvage ; et
g) générer une épreuve avec l'imprimante d'épreuvage en se basant sur les données d'impression créées.

2. Procédé selon la revendication 1, dans lequel les valeurs de couleur sont représentées dans un espace chromatique tridimensionnel, de préférence dans l'espace chromatique Lab, et la valeur de couleur de départ la plus proche a une distance spatiale vis-à-vis de la valeur de couleur d'entrée inférieure ou égale à une valeur seuil prédéterminée.

3. Procédé selon la revendication 2, dans lequel, dans l'interpolation de la valeur de couleur cible d'imprimante d'épreuvage, les valeurs de couleur de départ sont pondérées selon leur distance spatiale vis-à-vis de la valeur de couleur d'entrée.

4. Procédé selon l'une quelconque des revendications précédentes, dans lequel les données de correction pour l'imprimante d'épreuvage avec le profil de couleur d'imprimante d'épreuvage prédéterminé et une imprimante de production avec un profil de couleur d'imprimante de production prédéterminé sont obtenues par les étapes de procédé suivantes :
I) fournir une image d'essai numérique ayant plusieurs valeurs de couleur d'entrée ;
IIa) créer des données d'impression pour l'imprimante de production à partir de l'image d'essai numérique en utilisant le profil de couleur d'imprimante de production ;
IIb) générer un produit d'essai avec l'imprimante de production en se basant sur les données d'impression créées pour l'imprimante de production ;
IIIa) créer des données d'impression pour l'imprimante d'épreuvage à partir de l'image d'essai numérique en utilisant le profil de couleur d'imprimante d'épreuvage ;
IIIb) générer une épreuve d'essai avec l'imprimante d'épreuvage en se basant sur les données d'impression créées pour l'imprimante d'épreuvage ;
IV) déterminer des écarts de couleur de l'épreuve d'essai pour chaque valeur de couleur d'entrée du produit d'essai ;
V) obtenir des données de correction pour l'imprimante d'épreuvage en se basant sur les écarts de couleur déterminés pour chaque valeur de couleur d'entrée.

5. Procédé selon la revendication 4, dans lequel le produit d'essai a été fabriqué essentiellement par le même procédé que le produit auquel la simulation de vivacité duquel l'imprimante d'épreuvage est destinée, dans lequel, au lieu de l'image numérique spécifiée, l'image d'essai numérique a été imprimée.

6. Procédé selon l'une quelconque des revendications 4 ou 5, dans lequel l'image du produit et/ou l'image d'essai du produit d'essai est recouverte d'au moins une couche de couverture au moins partiellement transparente, dans lequel la couche de couverture est de préférence structurée.

7. Procédé selon l'une quelconque des revendications 4 à 6, dans lequel l'image d'essai numérique est pourvue en se basant sur l'image numérique spécifiée, l'image d'essai numérique a préférentiellement des champs de couleur, chacun ayant une valeur de couleur qui apparaît de manière particulièrement fréquente dans l'image numérique spécifiée.

8. Procédé selon l'une quelconque des revendications 4 à 7, dans lequel l'étape consistant à déterminer les écarts de couleur est réalisée en mesurant les valeurs de couleur de l'épreuve d'essai et de l'image d'essai du produit d'essai avec un dispositif optique de mesure des couleurs, dans lequel, en particulier pour les valeurs de couleur de l'épreuve d'essai et de l'image d'essai du produit d'essai, le même dispositif optique de mesure des couleurs est utilisé.

9. Procédé selon l'une quelconque des revendications 4 à 8, dans lequel le procédé inclut en outre les étapes suivantes :
VI) créer une image d'essai numérique corrigée pour les couleurs en se basant sur l'image d'essai numérique et les données de correction pour l'imprimante d'épreuvage issues de l'étape V) ; et
VII) réaliser les étapes I) à V) avec l'image d'essai numérique corrigée pour les couleurs en tant qu'image d'essai numérique, dans lequel les données de correction pour l'imprimante d'épreuvage créées dans celles-ci sont accumulées avec les données de correction créées précédemment pour l'imprimante d'épreuvage ;
dans lequel de préférence les étapes VI) et VII) sont réalisées de manière itérative plusieurs fois à la suite jusqu'à ce que l'écart de couleur de l'étape IV) soit inférieure à une valeur de seuil/ou atteigne un minimum.

10. Procédé selon l'une quelconque des revendications 4 à 9, incluant en outre, pour corriger une caractéristique de reproduction des couleurs de l'impression cible, les étapes de procédé suivantes après l'étape g) :
h) déterminer les écarts de couleur de l'épreuve à partir de la vivacité de l'image numérique spécifiée ; et
i) créer des premières données de correction pour l'imprimante de production en se basant sur les écarts de couleur déterminés.

11. Procédé selon la revendication 10, incluant en outre les étapes de procédé suivantes :
j) créer une deuxième image numérique spécifiée corrigée pour les couleurs en se basant sur la première image numérique spécifiée corrigée pour les couleurs et les premières données de correction pour l'imprimante de production issues de l'étape i) ; et
k) réaliser les étapes f) à i) avec la deuxième image numérique spécifiée corrigée pour les couleurs issue de l'étape j) en tant que première image numérique spécifiée corrigée pour les couleurs, dans lequel les premières données de correction pour l'imprimante de production créées dans celles-ci sont accumulées avec les premières données de correction créées précédemment pour l'imprimante de production,
dans lequel de préférence les étapes j) et k) sont réalisées de manière itérative plusieurs fois à la suite jusqu'à ce que l'écart de couleur de l'étape h) soit inférieur à une valeur de seuil/ou atteigne un minimum.

12. Procédé selon l'une quelconque des revendications 10 ou 11, dans lequel le procédé inclut en outre les étapes suivantes :
l) créer une troisième image numérique spécifiée corrigée pour les couleurs en se basant sur l'image numérique spécifiée et les premières données de correction pour l'imprimante de production issues de l'étape i) ;
m) créer des données d'impression pour l'imprimante de production à partir de la troisième image numérique spécifiée corrigée pour les couleurs en utilisant le profil de couleur d'imprimante de production ;
n) créer au moins partiellement le produit incluant le fait d'imprimer la troisième image numérique spécifiée corrigée pour les couleurs avec l'imprimante de production en se basant sur les données d'impression créées ;
o) déterminer les écarts de couleur du produit à partir de la vivacité de l'image numérique spécifiée ; et
p) créer des secondes données de correction pour l'imprimante de production en se basant sur les écarts de couleur déterminés et les premières données de correction pour l'imprimante de production.

13. Procédé selon la revendication 12, dans lequel le procédé inclut en outre les étapes suivantes :
q) créer une quatrième image numérique spécifiée corrigée pour les couleurs en se basant sur l'image numérique spécifiée et les secondes données de correction pour l'imprimante de production issues de l'étape p) ;
r) réaliser les étapes m) à p) avec la quatrième image numérique spécifiée corrigée pour les couleurs issue de l'étape q) en tant que troisième image numérique spécifiée corrigée pour les couleurs, dans lequel les secondes données de correction créées dans celles-ci sont créées en se basant sur les écarts de couleur déterminés et les secondes données de correction précédentes,
dans lequel de préférence les étapes q) et r) sont réalisées de manière itérative plusieurs fois à la suite jusqu'à ce que l'écart de couleur de l'étape o) soit inférieur à une valeur de seuil/ou atteigne un minimum.

14. Procédé selon l'une quelconque des revendications 10 à 13, incluant en outre les étapes de procédé suivantes :
A) créer une image numérique spécifiée corrigée pour les couleurs en se basant sur l'image numérique spécifiée et les données de correction pour l'imprimante de production ;
B) créer des données d'impression pour l'imprimante de production à partir de l'image numérique spécifiée corrigée pour les couleurs en utilisant le profil de couleur d'imprimante de production ; et
C) générer une impression de production avec l'imprimante de production en se basant sur les données d'impression créées.
